(19) **Europäisches Patentamt**
**European Patent Office**
**Office européen des brevets**

(11)  **EP 2 851 811 B1**

(12)  # EUROPEAN PATENT SPECIFICATION

(45) Date of publication and mention
of the grant of the patent:
**13.03.2019 Bulletin 2019/11**

(51) Int Cl.:
**G06F 17/30** (2006.01)

(21) Application number: **13861576.0**

(86) International application number:
**PCT/CN2013/085080**

(22) Date of filing: **12.10.2013**

(87) International publication number:
**WO 2014/090034 (19.06.2014 Gazette 2014/25)**

(54) **METHOD AND DEVICE FOR ACHIEVING AUGMENTED REALITY APPLICATION**

VERFAHREN UND VORRICHTUNG ZUM ERREICHEN EINER ANWENDUNG FÜR ERWEITERTE REALITÄT

PROCÉDÉ ET DISPOSITIF DE RÉALISATION D'UNE APPLICATION DE RÉALITÉ AUGMENTÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2012 CN 201210539054**

(43) Date of publication of application:
**25.03.2015 Bulletin 2015/13**

(73) Proprietor: **Huawei Device (Dongguan) Co., Ltd. Dongguan, Guangdong 523808 (CN)**

(72) Inventor: **LI, Guoqing Shenzhen Guangdong 518129 (CN)**

(74) Representative: **Gill Jennings & Every LLP The Broadgate Tower 20 Primrose Street London EC2A 2ES (GB)**

(56) References cited:
**CN-A- 101 652 769     CN-A- 102 385 579**
**JP-B1- 4 976 578      US-A1- 2006 233 423**
**US-A1- 2007 073 937    US-A1- 2010 239 175**
**US-A1- 2012 019 526    US-A1- 2012 179 751**

- **Igor Kozintsev ET AL: "Visual Search and Augmented Reality on Mobile Plattforms", , June 2010 (2010-06), pages 1-16, XP055370932, Retrieved from the Internet: URL:http://airlab.stanford.edu/workshops/june2010presentations/Kozintsev_ElChoubassi_IntelLabs.pdf [retrieved on 2017-05-09]**
- **LIZ CASTRO: "iPhotos's new Faces feature really does work!", INTERNET CITATION, 17 February 2009 (2009-02-17), pages 1-8, XP002605447, Retrieved from the Internet: URL:http://www.pigsgourdsandwikis.com/2009/02/iphotos-new-faces-feature-really-does. html [retrieved on 2010-10-18]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The present invention relates to the field of computer technologies, and in particular, to a method and device for implementing an augmented reality application.

## BACKGROUND

A concept of augmented reality (Augmented Reality, AR for short) was originated in the 1990s. In 1994, Paul Milgram (Paul Milgram) and Fumio Kishino (Fumio Kishino) put forward Milgram's Reality-Virtuality Continuum (Milgram's Reality-Virtuality Continuum). They take a real environment and a virtual environment separately as two ends of a continuous system, and that located in the middle of the two ends is referred to as "Mixed Reality (Mixed Reality)". A part close to the real environment is the augmented reality (Augmented Reality) and a part close to the virtual environment is augmented virtuality (Augmented Virtuality).

The augmented reality AR is a technology used to help people acquire related information of an object in a real world in a more intuitive and vivid manner. A processing process of an augmented reality application (AR application for short) may be simply described as four steps including perceiving, identifying, matching, and rendering, which are specifically as follows:

Perceiving refers to that a user perceives various objects in the real world by using a camera and various sensors provided by a terminal device and collects various parameters such as an image, a position, a direction, a speed, a temperature, and a light intensity for an AR software to use.

Identifying refers to that the AR software processes data collected by the sensors, for example, the AR software analyzes and processes an image captured by the camera and attempts to identify an object in a photo. The AR software performs matching between a pattern of an object feature extracted from the image with a pattern stored in a local or an online pattern library. If the pattern is obtained by means of matching, identification succeeds; otherwise, identification fails.

Matching refers to that the AR software prepares multimedia content related to a pattern, such as graphic information, an audio and a video, and a 3D model, after identification succeeds. The media information may be locally saved to the terminal and may also be obtained online.

Rendering refers to that the AR software combines the multimedia content with an image of the real world that is captured by the camera for rendering on a display device of the user's terminal.

Currently, the AR application has good identification effects for a special type of image, such as a landmark building, a book, a famous painting, a bar code, a trademark, and a text. However, for an image that does not belong to the foregoing special type of image, an identification success rate of the AR application is not high, types of identifiable objects and an application scenario for the AR application are limited.

US2007/073937 discloses a method for collecting an image uploaded by a user and releasing an image to the social networking contacts of a user.

Igor Kozintsev ET AL: "Visual Search and Augmented Reality on Mobile Plattforms", June 2010, slides 1-16, retrieved from the Internet: URL:http://airlab.stanford.edu/workshops/june2010presentations/Kozintsev_ElChoubassi_IntelLabs.pdf discloses to implement an augmented reality reality application by matching a query image to an image database of images collected from Wikipedia which are geographically tagged and manually annotated with keywords.

JP4976578B1 discloses to hierarchically cluster images according to feature vectors of the images and to match a query image to the centroid feature vectors of the clusters for facilitating image searching.

Multiple aspects of embodiments of the present invention provide a method and device for implementing an augmented reality application, which can solve a problem of identifying a random object in an environment without a marker in an augmented reality application.

Aspects of the invention are set out in the claims.

According to the method and device for implementing an augmented reality application provided in the present invention, an image uploaded by a user and label information are collected, and comment information, from a social networking contact of the user, about the image; a keyword used to identify the image is extracted from the comment information; the image is added to an image album according to the label information of the image and the keyword; and according to image features of all images in the image album and the keyword, it is implemented that augmented reality content and an augmented reality pattern about a random object in an environment without a marker are automatically generated. By using the generated augmented reality pattern and augmented reality content, a problem of identifying a random object in the environment without a marker can be solved in an augmented reality application.

## BRIEF DESCRIPTION OF DRAWINGS

FIG. 1 is a schematic flowchart of a method for implementing an augmented reality application according to the present invention;
FIG. 2 is a schematic flowchart of step S105 in the method for implementing an augmented reality application shown in FIG. 1;
FIG. 3 is a schematic flowchart of another method for implementing an augmented reality application according the present invention;

FIG. 4 is a schematic structural diagram of a device for implementing an augmented reality application according to the present invention;

FIG. 5 is a schematic structural diagram of an image classifying unit in a device for implementing an augmented reality application according to the present invention;

FIG. 6 is a schematic structural diagram of an augmented reality processing unit in a device for implementing an augmented reality application according to the present invention;

FIG. 7 is a schematic structural diagram of another device for implementing an augmented reality application according to the present invention; and

FIG. 8 is a schematic structural diagram of a terminal according to the present invention.

## DESCRIPTION OF THE INVENTION

The following clearly and completely describes the technical solutions in the present invention with reference to the accompanying drawings in the present invention.

A technical problem to be solved by a method and device for implementing an augmented reality application provided in the present invention is as follows: In a common and unprocessed environment without a marker, any object is extracted and used as a pattern that is identified by AR, and related AR content is generated, so as to solve a problem of identifying a random object in the environment without a marker in an augmented reality application.

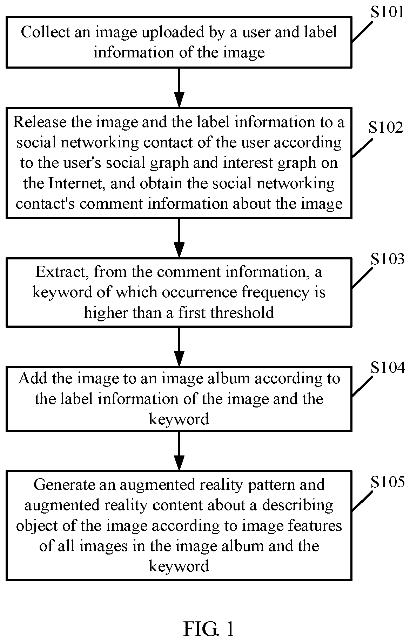

Referring to FIG. 1, FIG. 1 is a schematic flowchart of a method for implementing an augmented reality application according to the present invention.

The method for implementing an augmented reality application provided in the present invention includes steps S101-S105, which are specifically as follows:

S101. Collect an image uploaded by a user and label information of the image.

Specifically, the label information of the image may be any content in a text format and may be content such as geographical location information of a describing object of the image, auxiliary description information of the image, and photographing time of the image. For example, a photo is taken at Tian'anmen Square, and therefore "Tian'anmen Square" is a describing object of the image; a geographical location of "Tian'anmen Square" is geographical location information of the describing object of the image; and information about a scene, building, history, and the like "Tian'anmen Square" that is added to the photo by the user is auxiliary description information of the image.

During specific implementation, a camera that has a geographical location display function is used to take a photo, and extended information may be automatically added to a photographed image in a JPEG format, where the extended information is saved in an EXIF format and content of the extended information includes a geographical location (longitude, latitude, and altitude) and photographing time.

S102. Release the image and the label information to a social networking contact of the user according to the user's social graph and interest graph on the Internet, and obtain the social networking contact's comment information about the image.

With explosive development of websites such as Facebook, social networks arouse increasing attention, and therefore concepts of a social graph and an interest graph are derived. The social graph reveals an interpersonal relationship, and the interest graph reveals a hobby and an interest of the user and a derived interpersonal relationship.

In the present invention, according to the user's social graph and interest graph on the Internet, the image is released to the social networking contact of the user, and it may be inferred that the image is interested by the social networking contact. The comment information, about the image, obtained from the social networking contact can more accurately reflect features of a describing object of the image. By using a keyword extracted from the comment information about the image to create an augmented reality pattern and augmented reality content, a success rate of identifying a random object in an environment without a marker can be increased in the augmented reality application, thereby improving user experience.

S103. Extract, from the comment information, a keyword of which occurrence frequency is higher than a first threshold.

The keyword may be information, such as a scenery feature, culture information, and a history origin, of the describing object of the image. One or more keywords may be extracted from the comment information.

S104. Add the image to an image album according to the label information of the image and the keyword.

In an implementation manner, the label information includes the geographical location information of the describing object of the image. The foregoing step S104 includes: adding the image to an image library according to the geographical location information of the describing object of the image, where describing objects of images in the image library have same geographical location information, and the image library includes at least one image album; and adding the image to an image album of the image library according to the keyword, where images in the image album have a same keyword.

During specific implementation, an image library may be first created according to geographical location information of a describing object of an image, and images that have same geographical location information are added to a same image library. When the number of images in the image library meets a set boundary condition, at least one image album is then created in the image library according to different keywords, and images that have a same keyword are added to a same image album, thereby achieving a further classification of the images in the image library. For example, images related to a geographical location "Tian'anmen Square" are saved in an image library. This "Tian'anmen Square" image library is further divided into a "Monument to the People's Heroes" image album, a "Chairman Mao Memorial Hall" image album, and a "Zhengyangmen" image album, so that a two-level image storage structure "geographical location-based image library - keyword-based image album" is formed. The "Monument to the People's Heroes" image album is used to store images that have a keyword "Monument to the People's Heroes", the "Chairman Mao Memorial Hall" image album is used to store images that have a keyword "Chairman Mao Memorial Hall", and the "Zhengyangmen" image album is used to store images that have a keyword "Zhengyangmen". Each image in a same image album has a same describing object.

The foregoing "images that have same geographical location information" does not require that geographical locations be strictly consistent, and a same geographical location herein refers to a same range. For example, when geographical location information of photos are analyzed, it is found that some photos are taken within a range of a circle of which center is the Monument to the People's Heroes and radius is 500 meters, and the photos are classified into a category.

S105. Generate an augmented reality pattern (AR pattern for short) and augmented reality content (AR content for short) about a describing object of the image according to image features of all images in the image album and the keyword.

Each object in physical space has multiple features, such as a length, a width, a height, a color, a texture and a geographical location. The AR pattern refers to a group of features that are saved in a digital format and used to identify an object in the physical space in the AR application, and the features may be a color, a texture, a shape, a location, and the like.

In the AR application, digital multimedia information (an image, a text, a 3D object, and the like) is combined with a real object in the physical space, and displayed on a user terminal equipment as integrated AR experience. Herein, all multimedia information that can be used to overlay onto a real object in the physical space is the AR content.

During specific implementation, step S105 may be performed after the number of all images in the image album meets a set boundary condition or the number of keywords shared by all images in the image album meets a set boundary condition. The boundary condition may be that the number of all the images in the image album is greater than a set threshold of the number of images, or that the number of the keywords shared by all the images in the image album is greater than a set threshold of the number of keywords.

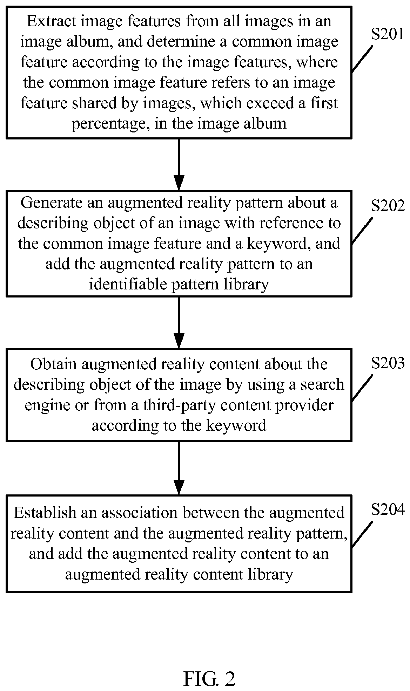

Referring to FIG. 2, step S105 specifically includes steps S201-S204, which are as follows:

S201. Extract the image features from all the images in the image album and determine a common image feature according to the image features, where the common image feature refers to an image feature shared by images, which exceed a first percentage, in the image album.

The first percentage may be set according to an actual application, for example, set to 80%.

During specific implementation, an image feature is extracted from each image in the image album, and it is assumed that a total of n image features including image features X1, X2, X3, ..., Xn are extracted. For example, an image with the "Tian'anmen Square", and image information about "Portrait of Chairman Mao" and "The Tian'anmen Rostrum" extracted from the image is an image feature.

By separately using the image features X1, X2, X3, ..., Xn to identify the images in the image album, a detection rate of each image feature for the images is obtained. For example, 90% of the images in the image album all have the image feature X1, and then a detection rate of the image feature X1 for the images is 90%.

After the detection rate of each image feature for the images is obtained, normalization processing is performed on detection rates. A detection rate with a maximum value among the detection rates is normalized to 1, and other detection rates obtained after normalization processing is performed are all less than 1. Each detection rate obtained after normalization processing is performed is a weighted value of an image feature corresponding to each detection rate. When a new image is added to the image album, the images in the image album are identified again according to the foregoing method. A weighted value of each image feature is constantly refreshed according to an identification result each time. After multiple times of identification, an image feature of which a detection rate is greater than a threshold (for example, 0.6) for a long term is marked as a common image feature , and the common image feature and a describing object of the image (that is, an AR target) match each other. However, an image feature of which a detection rate is less than or equal to the threshold for a long term is removed.

In addition, a similarity evaluation function

$$f(X_1, X_2, ..., X_n,) = \sum_{i=1}^{n} b_i K_i$$ may be set, where

$K_i$ is a normalized weighted value of an image feature $X_i$. If it can be determined, by using the image feature $X_i$, that an image uploaded by a user includes the AR target, $b_i=1$. Otherwise, $b_i=0$. The weighted value is constantly refreshed according to the identification result each time, and therefore the similarity evaluation function is a dynamic updating function. A matching degree between the AR target and an image uploaded by the user may be evaluated by using the function. Apparently, if an image feature is less related to the AR target, a normalized weighted value of the image feature exerts less impact on the similarity evaluation function. After multiple times of iteration, an image feature of which a normalized weighted value is less than a threshold is removed from the AR pattern.

S202. Generate the augmented reality pattern about the describing object of the image with reference to the common image feature and the keyword, and add the augmented reality pattern to an identifiable pattern library.

S203. Obtain, according to the keyword, the augmented reality content about the describing object of the image by using a search engine or from a third-party content provider.

S204. Establish an association between the augmented reality content and the augmented reality pattern, and add the augmented reality content to an augmented reality content library.

According to the method for implementing an augmented reality application provided in the present invention, an image uploaded by a user and label information are collected, and comment information, from a social networking contact of the user, about the image is acquired; a keyword used to identify the image is extracted from the comment information; the image is added to an image album according to the label information of the image and the keyword; and according to image features of all images in the image album and the keyword, it is implemented that an augmented reality pattern and augmented reality content about a random object in an environment without a marker are automatically generated. By using the generated augmented reality pattern and augmented reality content, a problem of identifying a random object in the environment without a marker can be solved in an augmented reality application.

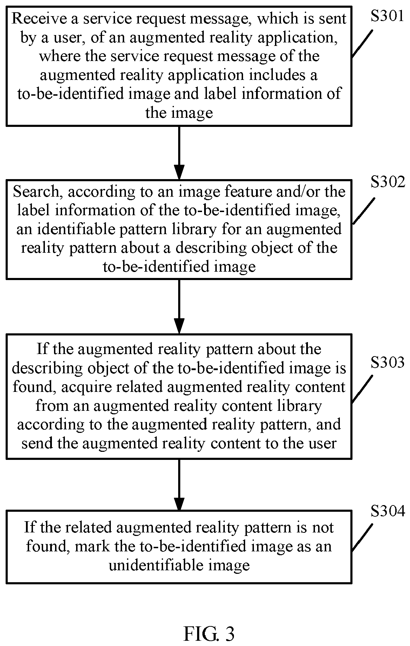

Referring to FIG. 3, FIG. 3 is a schematic flowchart of another method for implementing an augmented reality application according to the present invention.

The another method for implementing an augmented reality application provided in the present invention includes the foregoing steps S101-S105 and S201-S204. In addition, after an augmented reality pattern and augmented reality content are generated, a random object in an environment without a marker may further be identified by using the generated augmented reality pattern and augmented reality content, which includes the following steps:

S301. Receive a service request message, which is sent by the user, of an augmented reality application, where the service request message of the augmented reality application includes a to-be-identified image and label information of the image.

S302. Search, according to an image feature and/or the label information of the to-be-identified image, the identifiable pattern library for an augmented reality pattern about a describing object of the to-be-identified image.

S303. If the augmented reality pattern about the describing object of the to-be-identified image is found, acquire related augmented reality content from the augmented reality content library according to the augmented reality pattern, and send the augmented reality content to the user.

S304. If the related augmented reality pattern is not found, mark the to-be-identified image as an unidentifiable image.

In yet another implementation manner, after marking the to-be-identified image as an unidentifiable image in step S304, the method of steps S101-S105 and S201-S204 in the foregoing example may further be performed, so as to generate an augmented reality pattern and augmented reality content about a describing object of "the image marked as an unidentifiable image". That is, in step S101, the collected image is an image uploaded by the user and marked as an unidentifiable image. After the augmented reality pattern and the augmented reality content about the describing object of "the image marked as an unidentifiable image" are generated and when the user uploads "the image marked as an unidentifiable image" again, "the image marked as an unidentifiable image" can be identified, thereby solving a problem of identifying a random object in an environment without a marker in the augmented reality application.

In the method for implementing an augmented reality application provided in the present invention, when a user uses an augmented reality application service, a device or a system that uses the method further has a learning capability. By using an image that fails to be identified, an augmented reality pattern and augmented reality content about a describing object of the image can be automatically generated. If the method is used for longer time and by more users, a new augmented reality pattern and new augmented reality content that are generated are richer and a device has higher availability, and therefore a problem of identifying a random object in an environment without a maker can be solved in an augmented reality application.

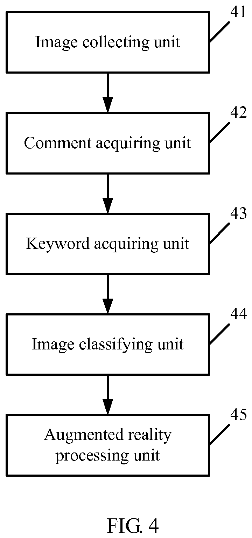

The present invention further provides a device for implementing an augmented reality application, which can implement all processes of the foregoing methods for implementing an augmented reality application, and is described in detail with reference to FIG. 4-FIG. 7 in the following.

Referring to FIG. 4, FIG. 4 is a schematic structural diagram of a device for implementing an augmented reality application according to the present invention.

The device for implementing an augmented reality application provided in the present invention includes an image collecting unit 41, a comment acquiring unit 42, a keyword acquiring unit 43, an image classifying unit 44, and an augmented reality processing unit 45, which are specifically as follows:

The image collecting unit 41 is configured to collect an image uploaded by a user and label information of the image.

The comment acquiring unit 42 is configured to release the image and the label information to a social networking contact of the user according to the user's social graph and interest graph on the Internet, and obtain the social networking contact's comment information about the image.

The keyword acquiring unit 43 is configured to extract, from the comment information, a keyword of which occurrence frequency is higher than a first threshold.

The image classifying unit 44 is configured to add the image to an image album according to the label information of the image and the keyword.

The augmented reality processing unit 45 is configured to generate an augmented reality pattern and augmented reality content about a describing object of the image according to image features of all images in the image album and the keyword.

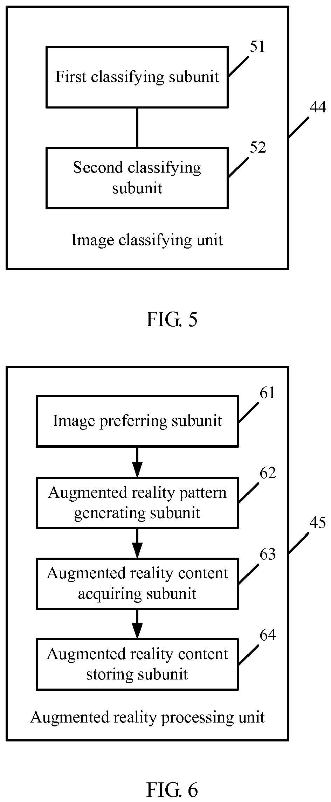

Referring to FIG. 5, FIG. 5 is a schematic structural diagram of an image classifying unit in a device for implementing an augmented reality application according to the present invention.

The label information includes geographical location information of the describing object of the image, and the image classifying unit 44 includes a first classifying subunit 51 and a second classifying subunit 52, which are as follows:

The first classifying subunit 51 is configured to add the image to an image library according to the geographical location information of the describing object of the image, where describing objects of images in the image library have same geographical location information, and the image library includes at least one image album.

The second classifying subunit 52 is configured to add the image to an image album in the image library according to the keyword, where images in the image album have a same keyword.

Referring to FIG. 6, FIG. 6 is a schematic structural diagram of an augmented reality processing unit in a device for implementing an augmented reality application according to the present invention.

The augmented reality processing unit 45 provided in the present invention includes an image preferring subunit 61, an augmented reality pattern generating subunit 62, an augmented reality content acquiring subunit 63, and an augmented reality content storing subunit 64, which are specifically as follows:

The image preferring subunit 61 is configured to extract the image features from all the images in the image album and determine a common image feature according to the image features, where the common image feature refers to an image feature shared by images, which exceed a first percentage, in the image album.

The augmented reality pattern generating subunit 62 is configured to generate the augmented reality pattern about the describing object of the image with reference to the common image feature and the keyword, and add the augmented reality pattern to an identifiable pattern library.

The augmented reality content acquiring subunit 63 is configured to obtain, according to the keyword, the augmented reality content about the describing object of the image by using a search engine or from a third-party content provider.

The augmented reality content storing subunit 64 is configured to establish an association between the augmented reality content and the augmented reality pattern, and add the augmented reality content to an augmented reality content library.

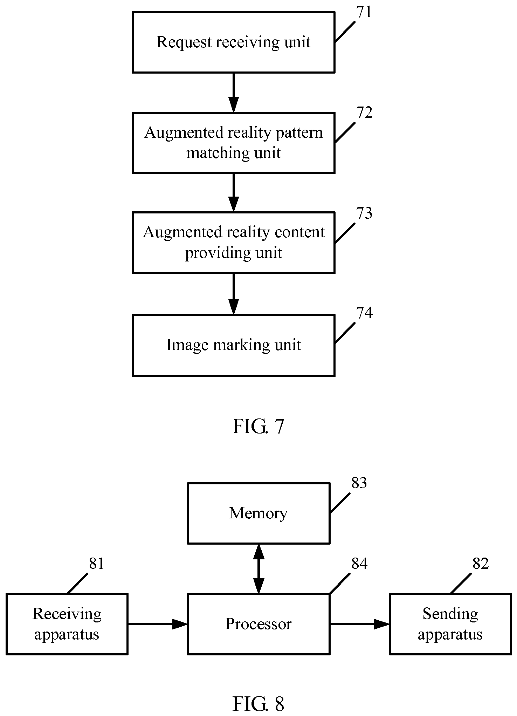

Referring to FIG. 7, FIG. 7 is a schematic structural diagram of another device for implementing an augmented reality application according to the present invention.

In addition to the image collecting unit 41, the comment acquiring unit 42, the keyword acquiring unit 43, the image classifying unit 44, and the augmented reality processing unit 45 in the foregoing embodiment, the another device for implementing an augmented reality application provided in the present invention further includes a request receiving unit 71, an augmented reality pattern matching unit 72, an augmented reality content providing unit 73, and an image marking unit 74, which are specifically as follows:

The request receiving unit 71 is configured to receive a service request message, which is sent by a user, of an augmented reality application, where the service request message of the augmented reality application includes a to-be-identified image and label information of the image.

The augmented reality pattern matching unit 72 is configured to search, according to an image feature and/or the label information of the to-be-identified image, the identifiable pattern library for an augmented reality pattern about a describing object of the to-be-identified image.

The augmented reality content providing unit 73 is configured to: if the augmented reality pattern about the describing object of the to-be-identified image is found, acquire related augmented reality content from the augmented reality content library according to the augmented reality pattern, and send the augmented reality content to the user.

The image marking unit 74 is configured to: if the related augmented reality pattern is not found, mark the to-be-identified image as an unidentifiable image.

In yet another implementation manner, an image collected by the image collecting unit 41 is an image uploaded by the user and marked as an unidentifiable image.

According to the device for implementing an augmented reality application provided in the present invention, an image uploaded by a user and label information are collected, and comment information, from a social networking contact of the user, about the image is acquired; a keyword used to identify the image is extracted from the comment information; the image is added to an image album according to the label information of the image and the keyword; and according to image features of all images in the image album and the keyword, it is implemented that an augmented reality pattern and augmented reality content about a random object in an environment without a marker are automatically generated. By using the generated augmented reality pattern and augmented reality content, a problem of identifying a random object in the environment without a marker can be solved in an augmented reality application.

With reference to steps S801-S814, the following describes in detail, by using that an image uploaded by a user is a photo as an example, a processing process of a method and device for implementing an augmented reality application provided in the present invention.

S801. A user uses a smartphone to take a photo, a describing object in the photo is an object (AR target) that the user is interested in; and the user adds geographical location information (GeoTagging) and other user-defined label information to the photo, and then, submits the photo and a tag of the geographical location information to a device for implementing an augmented reality application (hereinafter referred to as an AR device). The AR device can implement a method for implementing an augmented reality application provided in the present invention.

S802. The AR device performs image processing on the photo and extracts an AR pattern about the object in the photo, and if the AR pattern about the object in the photo can be obtained by means of matching in an identifiable pattern library, searches an AR content library for related AR content according to the AR pattern.

S803. The AR content library returns the found AR content to the smartphone, and then a local application on the smartphone combines the AR content and a real scenario captured by a camera into AR experience, and presents the AR experience to the user.

When the AR device cannot identify the AR pattern about the object in the photo, the processing process of the method for implementing an augmented reality application provided in the present invention is performed to generate AR content and an AR pattern, so as to provide a service for a next user when the user attempts again to identify the foregoing object. Steps S804-S814 are as follows:

S804. The AR device performs image processing on the photo and extracts the AR pattern about the object in the photo, but cannot find the foregoing AR pattern in the identifiable pattern library, or an AR identifying module cannot extract a valid AR pattern from the photo, so that the photo is marked as an unidentifiable image, and the photo is sent to an unidentifiable image library.

If multiple users take a large number of photos at a same place and uploaded the photos, the AR device creates an image library according to the GeoTagging and saves photos that have same geographical location information to a same image library.

S805. Acquire an unidentifiable photo and label information of the unidentifiable photo from the unidentifiable image library.

S806. Release the photo to the user's friend on a social network site according to the user's social graph on the Internet, or send the photo to a related social networking contact of the user according to a label added by the user and an interest graph of the user.

S807. After the photo is released on the social network site SNS, the user's friend is expected to add a comment and perform a discussion for the foregoing photo, and the SNS returns comment information to the AR device.

S808. The AR device performs a comprehensive analysis on the received comment information and extracts a hot keyword or a keyword with a relatively high utilization frequency as information for describing the foregoing photo.

S809. After collecting enough keywords, the AR device performs further division on the image library created according to the geographical location information. For example, an image library saves photos related to a geographical location "Tian'anmen Square", and keywords collected by the AR device include "Monument to the People's Heroes", "Chairman Mao Memorial Hall", and "Zhengyangmen". This "Tian'anmen Square" image library may be further divided into three image albums that store photos including the foregoing three keywords separately. In this way, the image library is gradually divided into a three-level storage structure "unidentifiable image library - geographical location-based image library - keyword-based image album".

S810. When the number of images in an image album meets a set boundary condition, an image processing algorithm is enabled, and a common image feature is extracted from photos in the image album, where for a photo of which an image feature cannot be extracted, the photo may be used as a sample to train an identification algorithm and improve identification accuracy.

S811. Generate the AR pattern about the describing object in the image with reference to the common image feature and the keyword, and save the AR pattern to an identifiable pattern library. Therefore, the identifiable pattern library becomes richer, and after an object that cannot be identified this time fails to be identified for several times, and the identifiable pattern library accumulates enough data, the object that cannot be identified this time changes to an identifiable object.

S812. Send the keyword to a search engine, and the search engine collects AR content.

S813. Save the AR content collected by the search engine to the AR content library; in addition, the AR pattern may further be provided for a third-party content provider, the third-party content provider provides AR content for the AR pattern, and this part of AR content is also stored to the AR content library.

S814. The AR content library returns a group of content to the smartphone; and the AR device on the smartphone combines virtual information and a real scenario, and presents AR experience to the user.

In conclusion, in steps S804-S814, a new AR pattern and new AR content are generated by using an unidentifiable photo uploaded by the user. If the method is used for longer time and by more users, the new AR pattern and new AR content that are generated become richer, and an AR device has higher performance in identifying an image.

With reference to three application scenarios, the following describes in detail beneficial effects of a method and device for implementing an augmented reality application provided in the present invention.

**APPLICATION SCENARIO 1**

A large number of visitors come to Tian'anmen Square every day, and large targets near Tian'anmen Square include the Tian'anmen Rostrum, the Golden Water Bridge, a reviewing stand, flagpoles, the Great Hall of the People, Zhengyangmen, the Monument to the People's Heroes, the Chairman Mao Memorial Hall, the National Museum, and the like. In addition, there are also some other targets that may be concerned by a user, such as sculptures in front of the Chairman Mao Memorial Hall, reliefs on the Monument to the People's Heroes, colonnades of the Great Hall of the People, entrances for the metro line 1, temporary landscapes placed in the square every Labor's Day and National Day, and the like. With reference to this application scenario, the following describes beneficial effects of a method and device for implementing an augmented reality application provided in the present invention.

A person A who comes from Hangzhou travels to Beijing during National Day and comes to Tian'anmen Square around which magnificent buildings deeply attracts the person A. What the person A is most interested in is a plaque on the Zhengyangmen gatehouse. The person A is fond of calligraphy and wonders who inscribed the words on the plaque on the Zhengyangmen gatehouse.

In order to make certain who inscribed the words on the plaque, the person A takes a photo of the plaque on the Zhengyangmen gatehouse and starts an AR device to attempt to identify the plaque. Unfortunately, the AR device does not successfully identify the plaque, but only prompts the person A to add some description information and geographical location information and prompts the person A to use the AR device for identification a period of time later.

The AR device sends the photo of the plaque to the person A's friends on the Renren.com, and leaves a question to them: Do you know who inscribed the words on this plaque? The AR device sends, according to an API (Application Programming Interface, Application Programming Interface) provided by the Renren.com, the photo to those friends who add a calligraphy item to the person A's hobbies.

The person A's friends make comments on the photo after receiving the photo one after another. The AR device obtains all comment information by using the API on the Renren.com, and obtains a keyword "plaque" by means of analysis.

In addition, a large number of visitors gather at Tian'anmen Square for touring, and quite a few visitors who have similar interests to the person A use a same AR device to attempt to identify the plaque on the Zhengyangmen gatehouse. Within a short period, the AR device receives a large number of photos of the Zhengyangmen gatehouse (a geographical location), and obtains the keyword "plaque" by analyzing comments, of these users' friends, on the photos. Therefore, the AR device divides photos that are labeled with the plaque (from user-defined labels or the friends' comments) into a sub-album; performs image processing to extract features of this type of photo; records geographical location information and the keyword "plaque"; and saves the features (that is, an AR pattern) to an identifiable pattern library.

The AR device provides the geographical location information and the keyword "plaque" to a search engine, and the search engine retrieves a series of related content, such as an image related to the plaque, a color and a material of the plaque, time when the plaque was hanged onto the gatehouse, and a person who wrote the words on the plaque. In addition, the AR device provides the photos, the geographical location information, and the keyword "plaque" to a third-party content provider of the AR device. The content provider has detailed information of old Beijing's commercial plaques and gate tower plaques, and records writers of the plaques and lifetimes of the writers. After the content is retrieved, the content is returned to an AR content library and is associated with the foregoing extracted AR pattern.

Next day, the person A comes to the Zhengyangmen gatehouse together with a friend D in Beijing. When the person A uses the AR device again to attempt to identify the plaque, the person A is surprised to find that the plaque is successfully identified, and obtains information and a lifetime of the writer of the plaque. The person A gladly shares the story about the plaque with the friend.

**APPLICATION SCENARIO 2**

The National Museum often holds exhibitions of cultural relics and works of art. Recently, the National Museum will launch a "Buddha Statue Exhibition", and the exhibition is scheduled to last for three months. A preview is provided during the first two weeks when a part of experts and a specific number of audiences are invited for visiting, and the exhibition opens to normal audiences for visiting two weeks later. In addition, the National Museum uses a method and device for implementing an augmented reality application provided in the present invention. An AR background is connected to a database and an internal search engine of the National Museum. When entering the National Museum, audiences can download and install the AR device by using a wireless connection, and a user is prompted to offer, by using the AR device, help to improve the exhibition, so that more content is provided for the normal audiences.

Most of a first group of invited audiences cooperate with a sponsor and install the AR device. They are experts in the field of Buddha statues, and deeply feel that an introductory text is extremely simple and provided related information is not rich enough when visiting the exhibition. Therefore, the experts take out mobile phones to take photos of and make comments on the Buddha statues in various shapes by using the AR device.

The experts' photos and comments are quickly uploaded to the AR background. The AR device classifies the photos according to the experts' comments (such as labels added by the experts and experts' questions on the Buddha statues); precisely divides the collected photos into sub-albums; and extracts an AR pattern and saves the AR pattern to a pattern library. In addition, the AR device sends the experts' photos to the experts' friends who cannot visit the exhibition themselves, and the experts' friends publish a large number of comments on and questions about the photos. The AR device collects the comments and the questions and extracts a keyword.

The AR device analyzes the experts' comments and questions raised by the experts; obtains some keywords and key questions; and then retrieves, from the database of the National Museum, a large amount of related content, where the related content used as AR content is associated with the foregoing generated AR pattern.

Two weeks later, the AR device accumulates enough AR patterns and AR content associated with the AR patterns. After the exhibition opens to normal audiences for visiting, the normal users, by using the AR device, can easily identify the Buddha statues in a camera and obtain detailed information such as dynasties, origins and names of the Buddha statues.

**APPLICATION SCENARIO 3**

A person A and a person B establish a friend relationship on the image-sharing social networking site Instagram. The two persons share a common hobby in liking pet cats. The person A and person B also care about stray cats near their home and often take photos for sharing. Both the two persons are users of an AR device disclosed in the present invention.

The person A attempts to identify a stray cat near the person A's home by using the AR device on the person A's terminal, but because there is no "pattern" (pattern) about the cat in a pattern library on a background of the AR device, identification fails. The person A adds a label "uncle cat" to the photo and submits the photo to the AR device.

The AR device invokes an API provided by an SNS website to send the unidentifiable photo to a friend B on the SNS. The friend B adds a comment "the uncle cat is a senior employee in the Xinhua News Agency" to the photo, and then the AR device can extract a keyword uncle cat from the friend B's comment. If it is assumed that there are a large number of photos, which have different geographical locations and have labels "uncle cat", in an unidentifiable image library in the AR device, the photo may be added to a photo sub-album of which a geographical location is the person A's home and a label is "uncle cat".The sub-album further includes some uploaded photos, which are labeled with "uncle cat", taken by other users near the person A's home.

The AR device finds, according to a geographical location, user-defined auxiliary information, and a user relationship, a photo that is about the cat and taken nearby the geographical location of the person A's home and a photo that is about the cat and taken nearby the friend B's home. Geographical location information of the two images is different, and the two images belong to different image albums. However, both the two photos include the label "uncle cat", and the AR device considers that there is an inherent relationship between this two types of photos. Therefore, the two image albums are integrated into one sub-album, so that photo classifying is not limited by a geographical location.

When the AR device acquires a specific number of photos that have an inherent relationship (such as having a same label), image features of photos that have the label "uncle cat" are obtained by means of feature extraction, for example, features, such as a decorative pattern and a color. The image features are used as a pattern registered with the AR device, so that the AR device obtains a new identifiable AR pattern.

The background of the AR device is connected to a third-party content provider, such as a pet hospital website. The website provides, for the AR device, some service information customized for pet cats. The AR device collects, by using a search engine, some information such as photos of adorable pet cats and precautions for raising cats.

When the person A or friend B uses the AR device again to identify the foregoing photo of the cat later, this object can be identified because the AR pattern about the cat is registered with the AR device, and a user of the AR device is provided with AR content, such as service information provided by a pet hospital, information found by the search engine, and comments on the cat from the person A and friend B.

According to the method and device for implementing an augmented reality application provided the present invention, an image uploaded by a user and label information are collected, and comment information, from a social networking contact of the user, about the image is acquired; a keyword used to identify the image is extracted from the comment information; the image is added to an image album according to the label information of the image and the keyword; and according to image features of all images in the image album and the keyword, it is implemented that an augmented reality pattern and augmented reality content about a random object in an environment without a marker are automatically generated. By using the generated augmented reality pattern and augmented reality content, a problem of identifying a random object in the environment without a marker can be solved in an augmented reality application.

Referring to FIG. 8, the present invention provides a terminal, which includes a receiving apparatus 81, a sending apparatus 82, a memory 83, and a processor 84.

In addition to a connection manner shown in FIG. 8, in some other examples of the present invention, the receiving apparatus 81, the sending apparatus 82, the memory 83, and the processor 84 may further be connected by using a bus. The bus may be an ISA (Industry Standard Architecture, Industry Standard Architecture) bus, a PCI (Peripheral Component, Peripheral Component) bus, an EISA (Extended Industry Standard Architecture, Extended Industry Standard Architecture) bus, or the like. The bus may have one or more physical lines, and when the bus has multiple physical lines, the bus may be classified into an address bus, a data bus, a control bus, and the like.

The processor 84 may perform the following steps: collecting, by using the receiving apparatus 81, an image uploaded by a user and label information of the image; releasing, according to the user's social graph and interest graph on the Internet, the image and the label information to the user's social networking contact by using the sending apparatus 82, and obtaining the social networking contact's comment information about the image by using the receiving apparatus 81; extracting, from the comment information, a keyword of which occurrence frequency is higher than a first threshold; adding the image to an image album according to the label information of the image and the keyword; and generating an augmented reality pattern and augmented reality content about a describing object of the image according to image features of all images in the image album and the keyword.

A further detailed technical solution for the processor 84 to execute a program may be but is not limited to detailed descriptions in examples shown in FIG. 1-FIG. 3.

The memory 83 is configured to store a program that needs to be executed by the processor 84. Further, the memory 83 may store a result generated by the processor 84 in a computing process.

The present invention further provides a computer storage medium. The computer storage medium stores a computer program, and the computer program may perform steps in the embodiments shown in FIG. 1-FIG. 3.

It should be noted that the described apparatus is merely exemplary. The units described as separate parts may or may not be physically separate, and parts displayed as units may or may not be physical units, may be located in one position, or may be distributed on a plurality of network units. Apart or all of the modules may be selected according to actual needs to achieve the objectives of the solutions. In addition, in the accompanying drawings of the apparatus provided by the present invention, a connection relationship between modules indicates that a communication connection exists between them, which may be specifically implemented as one or more communications buses or signal cables. Persons of ordinary skill in the art may understand and implement the the present invention without creative efforts. Based on the foregoing descriptions, persons skilled in the art may clearly understand that the present invention may be implemented by software in addition to necessary universal hardware or by dedicated hardware including a dedicated integrated circuit, a dedicated CPU, a dedicated memory, a dedicated component and the like. Generally, all functions that can be performed by a computer program can be easily implemented by using corresponding hardware. Moreover, specific hardware structures used to achieve a same function may be varied, for example, an analog circuit, a digital circuit, a dedicated circuit, or the like. However, as for the present invention, software program implementation is a better implementation manner in most cases. Based on such an understanding, the technical solutions of the present invention essentially or the part contributing to the prior art may be implemented in a form of a software product. The computer software product is stored in a readable storage medium, such as a floppy disk, a USB flash disk, a mobile hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, and the like) to perform the methods described of the present invention.

The foregoing descriptions are merely specific implementation manners of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A method for implementing an augmented reality, AR, application in which digital multimedia information is combined with a real object in physical space and displayed on a user terminal equipment, the method comprising:

collecting an image uploaded by a user and label information of the image, wherein the label information comprises geographical location information of a describing object of the image; obtaining a social networking contact's comment information about the image wherein, the image and the label information have been released to a social networking contact of the user according to the user's social graph and interest graph on the internet; extracting, from the comment information, a keyword of which occurrence frequency is higher than a first threshold, wherein the keyword is used to identify the image and indicates one or more information selected from a group comprising: a scenery feature, culture information and a history origin of the describing object of the image; adding the image to an image library based on the geographical location information of the image, such that each image in the image library has the same geographical information; adding the image to an image album in the image library according to the keyword, such that each image in the image album has the same keyword; generating an augmented reality pattern about a describing object of the image according to common image features of images in the image album and the keyword; and, obtaining augmented reality content about the describing object according to the keyword by using a search engine or from a third-party content provider, wherein the augmented reality pattern comprises features which are stored in a digital format and which are used to identify the object in physical space in the AR application, and the augmented reality content comprises information that can be used as an overlay on the object by the AR application for display on a user terminal equipment.

2. The method for implementing an augmented reality application according to claim 1, wherein the generating an augmented reality pattern about a describing object of the image according to image features of all images in the image album and the keyword comprises: extracting the image features from all the images in the image album, and determining a common image feature according to the image features, wherein the common image feature refers to an image feature shared by images, a percentage of which to total images exceeds a first percentage, in the image album; generating the augmented reality pattern about the describing object of the image with reference to the common image feature and the keyword, and adding the augmented reality pattern to an identifiable pattern library; and establishing an association between the augmented reality content and the augmented reality pattern, and adding the augmented reality content to an augmented reality content library.

3. The method for implementing an augmented reality application according to claim 2, wherein after the generating an augmented reality pattern and the obtaining of augmented reality content about a describing object of the image, the method further comprises:

  receiving a service request message, which is sent by the user, of an augmented reality application, wherein the service request message of the augmented reality application comprises a to-be-identified image and label information of the image; searching, according to an image feature and/or the label information of the to-be-identified image, the identifiable pattern library for an augmented reality pattern about a describing object of the to-be-identified image; if the augmented reality pattern about the describing object of the to-be-identified image is found, acquiring related augmented reality content from the augmented reality content library according to the augmented reality pattern, and sending the augmented reality content to the user; and if the related augmented reality pattern is not found, marking the to-be-identified image as an unidentifiable image.

4. The method for implementing an augmented reality application according to claim 3, wherein in the step of collecting an image uploaded by a user and label information of the image, the collected image is an image uploaded by the user and marked as an unidentifiable image.

5. A device for implementing an augmented reality, AR, application in which digital multimedia information is combined with a real object in physical space and displayed on a user terminal equipment, the device being configured to carry out the method of any of claims 1-4.

**Patentansprüche**

1. Verfahren zur Implementierung einer Anwendung für erweiterte Realität, AR - "Augmented Reality", in welcher digitale Multimediainformationen mit einem realen Objekt im physischen Raum kombiniert und auf einem Benutzerendgerät angezeigt werden, wobei das Verfahren Folgendes umfasst:

  Sammeln eines Bildes, das durch einen Benutzer hochgeladen wird, und von Kennzeichnungsinformationen des Bildes, wobei die Kennzeichnungsinformationen geografische Standortinformationen eines beschreibenden Objektes des Bildes umfassen;

Erhalten von Kommentarinformationen eines sozialen Netzwerkkontaktes zu dem Bild, wobei das Bild und die Kennzeichnungsinformationen gemäß des sozialen Graphen und des Interessengraphen des Benutzers im Internet an einen sozialen Netzwerkkontakt des Benutzers freigegeben wurden;

Extrahieren, aus den Kommentarinformationen, eines Schlüsselwortes, dessen Auftretenshäufigkeit höher als eine erste Schwelle ist, wobei das Schlüsselwort verwendet wird, um das Bild zu identifizieren, und eine oder mehrere Informationen ausgewählt aus einer Gruppe, welche Folgendes umfasst, angibt: ein Landschaftsmerkmal, eine Kulturinformation und einen geschichtlichen Ursprung des beschreibenden Objektes des Bildes;

Hinzufügen des Bildes zu einer Bildbibliothek basierend auf den geografischen Standortinformationen des Bildes, derart, dass jedes Bild in der Bildbibliothek die gleichen geografischen Informationen aufweist;

Hinzufügen des Bildes zu einem Bildalbum in der Bildbibliothek gemäß des Schlüsselwortes, derart, dass jedes Bild in dem Bildalbum das gleiche Schlüsselwort aufweist;

Erzeugen eines Musters für erweiterte Realität zu einem beschreibenden Objekt des Bildes gemäß gemeinsamer Bildmerkmale von Bildern in dem Bildalbum und des Schlüsselwortes; und Erhalten von Inhalt für erweiterte Realität zu dem beschreibenden Objekt gemäß des Schlüsselwortes durch Verwendung einer Suchmaschine oder von einem Drittanbieter von Inhalt,

wobei das Muster für erweiterte Realität Merkmale umfasst, welche in einem digitalen Format gespeichert sind und welche zum Identifizieren des Objektes im physischen Raum in der AR-Anwendung verwendet werden, und der Inhalt für erweiterte Realität Informationen umfasst, die durch die AR-Anwendung als eine Einblendung über dem Objekt zur Anzeige auf einem Benutzerendgerät verwendet werden können.

2. Verfahren zur Implementierung einer Anwendung für erweiterte Realität nach Anspruch 1, wobei das Erzeugen eines Musters für erweiterte Realität zu einem beschreibenden Objekt des Bildes gemäß Bildmerkmalen aller Bilder in dem Bildalbum und des Schlüsselwortes Folgendes umfasst:

Extrahieren der Bildmerkmale aus sämtlichen Bildern in dem Bildalbum und Bestimmen eines gemeinsamen Bildmerkmals gemäß der Bildmerkmale, wobei sich das gemeinsame Bildmerkmal auf ein Bildmerkmal bezieht, welches Bilder, deren Prozentsatz zu den gesamten Bildern einen ersten Prozentsatz übersteigt, in dem Bildalbum gemeinsam haben;

Erzeugen des Musters für erweiterte Realität zu dem beschreibenden Objekt des Bildes unter Bezugnahme auf das gemeinsame Bildmerkmal und das Schlüsselwort und Hinzufügen des Musters für erweiterte Realität zu einer identifizierbaren Musterbibliothek; und

Herstellen einer Assoziation zwischen dem Inhalt für erweiterte Realität und dem Muster für erweiterte Realität und Hinzufügen des Inhalts für erweiterte Realität zu einer Inhaltsbibliothek für erweiterte Realität.

3. Verfahren zur Implementierung einer Anwendung für erweiterte Realität nach Anspruch 2, wobei, nach dem Erzeugen eines Musters für erweiterte Realität und dem Erhalten von Inhalt für erweiterte Realität zu einem beschreibenden Objekt des Bildes, das Verfahren ferner Folgendes umfasst:

Empfangen einer Dienstanfragenachricht, welche durch den Benutzer gesendet wird, einer Anwendung für erweiterte Realität, wobei die Dienstanfragenachricht der Anwendung für erweiterte Realität ein zu identifizierendes Bild und Kennzeichnungsinformationen des Bildes umfasst;

Durchsuchen, gemäß eines Bildmerkmals und/oder der Kennzeichnungsinformationen des zu identifizierenden Bildes, der Bibliothek identifizierbarer Muster nach einem Muster für erweiterte Realität zu einem beschreibenden Objekt des zu identifizierenden Bildes;

wenn das Muster für erweiterte Realität zu dem beschreibenden Objekt des zu identifizierenden Bildes gefunden wird, Erfassen von verwandtem Inhalt für erweiterte Realität aus der Inhaltsbibliothek für erweiterte Realität gemäß des Musters für erweiterte Realität und Senden des Inhalts für erweiterte Realität an den Benutzer; und

wenn das verwandte Muster für erweiterte Realität nicht gefunden wird, Kennzeichnen des zu identifizierenden Bildes als ein nichtidentifizierbares Bild.

4. Verfahren zur Implementierung einer Anwendung für erweiterte Realität nach Anspruch 3, wobei beim Schritt des Sammelns eines Bildes, das durch einen Benutzer hochgeladen wird, und von Kennzeichnungsinformationen des Bildes das gesammelte Bild ein Bild ist, das durch einen Benutzer hochgeladen wird und als ein nichtidentifizierbares Bild gekennzeichnet ist.

5. Vorrichtung zur Implementierung einer Anwendung für erweiterte Realität, AR, in welcher digitale Multimediainformationen mit einem realen Objekt im physischen Raum kombiniert und auf einem Benutzerendgerät angezeigt werden, wobei die Vorrichtung zur Ausführung des Verfahrens nach einem der Ansprüche 1-4 konfiguriert ist.

**Revendications**

1. Procédé de mise en oeuvre d'une application de réalité augmentée, AR, dans laquelle des informations multimédias numériques sont combinées avec un objet réel dans un espace physique et affichées sur un équipement de terminal d'utilisateur, le procédé comprenant :

la collecte d'une image transférée par un utilisateur et d'informations d'étiquette de l'image, les informations d'étiquette comprenant des informations d'emplacement géographique d'un objet de description de l'image ;
l'obtention d'informations de commentaire d'un contact de réseaux sociaux concernant l'image, l'image et les informations d'étiquette ayant été divulguées à un contact de réseaux sociaux de l'utilisateur selon le graphique social de l'utilisateur et le graphe d'intérêt sur Internet ;
l'extraction, à partir des informations de commentaire, d'un mot-clé dont la fréquence d'occurrence est supérieure à un premier seuil, le mot-clé étant utilisé pour identifier l'image et indiquant une ou plusieurs informations sélectionnées dans un groupe comprenant : une caractéristique de scène, des informations de culture et une origine d'historique de l'objet de description de l'image ;
l'ajout de l'image à une bibliothèque d'images sur la base des informations d'emplacement géographique de l'image, de telle sorte que chaque image dans la bibliothèque d'images a les mêmes informations géographiques ;
l'ajout de l'image à un album d'images dans la bibliothèque d'images selon le mot-clé, de telle sorte que chaque image dans l'album d'images a le même mot-clé ;
la génération d'un motif de réalité augmentée concernant un objet de description de l'image selon des caractéristiques d'image communes des images dans l'album d'images et du mot-clé ; et,
l'obtention d'un contenu de réalité augmentée concernant l'objet de description selon le mot-clé à l'aide d'un moteur de recherche ou d'un fournisseur de contenu tiers, le motif de réalité augmentée comprenant des caractéristiques qui sont stockées dans un format numérique et qui sont utilisées pour identifier l'objet dans un espace physique dans l'application AR, et le contenu de réalité augmentée comprenant des informations qui peuvent être utilisées en tant que superposition sur l'objet par l'application AR pour un affichage sur un équipement de terminal d'utilisateur.

2. Procédé de mise en oeuvre d'une application de réalité augmentée selon la revendication 1, la génération d'un motif de réalité augmentée concernant un objet de description de l'image selon des caractéristiques d'image de toutes les images dans l'album d'images et le mot-clé comprenant :

l'extraction des caractéristiques d'image de toutes les images dans l'album d'images, et la détermination d'une caractéristique d'image commune selon les caractéristiques d'image, la caractéristique d'image commune se rapportant à une caractéristique d'image partagée par des images, dont le pourcentage par rapport à des images totales dépasse un premier pourcentage, dans l'album d'images ;
la génération du motif de réalité augmentée concernant l'objet de description de l'image en référence à la caractéristique d'image commune et au mot-clé, et l'ajout du motif de réalité augmentée à une bibliothèque de motifs identifiables ; et
l'établissement d'une association entre le contenu de réalité augmentée et le motif de réalité augmentée, et l'ajout du contenu de réalité augmentée à une bibliothèque de contenus de réalité augmentée.

3. Procédé de mise en oeuvre d'une application de réalité augmentée selon la revendication 2, après la génération d'un motif de réalité augmentée et l'obtention d'un contenu de réalité augmentée concernant un objet de description de l'image, le procédé comprenant en outre :

la réception d'un message de demande de service, qui est envoyé par l'utilisateur, d'une application de réalité augmentée, le message de demande de service de l'application de réalité augmentée comprenant une image à identifier et des informations d'étiquette de l'image ;
la recherche, selon une caractéristique d'image et/ou des informations d'étiquette de l'image à identifier, dans la bibliothèque de motifs identifiables d'un motif de réalité augmentée concernant un objet de description de l'image à identifier ;

si le motif de réalité augmentée concernant l'objet de description de l'image à identifier est trouvé, l'acquisition d'un contenu de réalité augmentée associé à partir de la bibliothèque de contenus de réalité augmentée selon le motif de réalité augmentée, et l'envoi du contenu de réalité augmentée à l'utilisateur ; et

si le motif de réalité augmentée associé n'est pas trouvé, le marquage de l'image à identifier en tant qu'image non identifiable.

4. Procédé de mise en oeuvre d'une application de réalité augmentée selon la revendication 3, dans l'étape de collecte d'une image transférée par un utilisateur et des informations d'étiquette de l'image, l'image collectée étant une image transférée par l'utilisateur et marquée comme une image non identifiable.

5. Dispositif pour mettre en oeuvre une application de réalité augmentée, AR, dans laquelle des informations multimédias numériques sont combinées avec un objet réel dans un espace physique et affichées sur un équipement de terminal d'utilisateur, le dispositif étant configuré pour mettre en oeuvre le procédé selon l'une quelconque des revendications 1 à 4.

```
                                                              S101
┌─────────────────────────────────────────┐    ╱
│   Collect an image uploaded by a user and label │
│          information of the image          │
└─────────────────────────────────────────┘
                    │
                    ▼
┌─────────────────────────────────────────┐    S102
│  Release the image and the label information to a │  ╱
│   social networking contact of the user according │
│   to the user's social graph and interest graph on │
│    the Internet, and obtain the social networking  │
│  contact's comment information about the image │
└─────────────────────────────────────────┘
                    │
                    ▼
┌─────────────────────────────────────────┐    S103
│    Extract, from the comment information, a    │  ╱
│   keyword of which occurrence frequency is    │
│          higher than a first threshold         │
└─────────────────────────────────────────┘
                    │
                    ▼
┌─────────────────────────────────────────┐    S104
│  Add the image to an image album according to │  ╱
│    the label information of the image and the    │
│                   keyword                    │
└─────────────────────────────────────────┘
                    │
                    ▼
┌─────────────────────────────────────────┐    S105
│   Generate an augmented reality pattern and    │  ╱
│   augmented reality content about a describing  │
│  object of the image according to image features │
│    of all images in the image album and the     │
│                   keyword                    │
└─────────────────────────────────────────┘
```

FIG. 1

15

Extract image features from all images in an
image album, and determine a common image
feature according to the image features, where
the common image feature refers to an image
feature shared by images, which exceed a first
percentage, in the image album

S201

Generate an augmented reality pattern about a
describing object of an image with reference to
the common image feature and a keyword, and
add the augmented reality pattern to an
identifiable pattern library

S202

Obtain augmented reality content about the
describing object of the image by using a search
engine or from a third-party content provider
according to the keyword

S203

Establish an association between the augmented
reality content and the augmented reality pattern,
and add the augmented reality content to an
augmented reality content library

S204

FIG. 2

Receive a service request message, which is sent by a user, of an augmented reality application, where the service request message of the augmented reality application includes a to-be-identified image and label information of the image

S301

Search, according to an image feature and/or the label information of the to-be-identified image, an identifiable pattern library for an augmented reality pattern about a describing object of the to-be-identified image

S302

If the augmented reality pattern about the describing object of the to-be-identified image is found, acquire related augmented reality content from an augmented reality content library according to the augmented reality pattern, and send the augmented reality content to the user

S303

If the related augmented reality pattern is not found, mark the to-be-identified image as an unidentifiable image

S304

FIG. 3

```
┌─────────────────────────┐
│                         │   41
│   Image collecting unit │
│                         │
└─────────────────────────┘
            │
            ▼
┌─────────────────────────┐
│                         │   42
│  Comment acquiring unit │
│                         │
└─────────────────────────┘
            │
            ▼
┌─────────────────────────┐
│                         │   43
│  Keyword acquiring unit │
│                         │
└─────────────────────────┘
            │
            ▼
┌─────────────────────────┐
│                         │   44
│   Image classifying unit│
│                         │
└─────────────────────────┘
            │
            ▼
┌─────────────────────────┐
│     Augmented reality   │   45
│     processing unit     │
│                         │
└─────────────────────────┘
```

FIG. 4

First classifying subunit — 51

Second classifying subunit — 52

Image classifying unit

44

**FIG. 5**

Image preferring subunit — 61

Augmented reality pattern generating subunit — 62

Augmented reality content acquiring subunit — 63

Augmented reality content storing subunit — 64

Augmented reality processing unit

45

**FIG. 6**

```
                    ┌─────────────────────────────┐  71
                    │   Request receiving unit     │╱
                    └─────────────────────────────┘
                                  │
                                  ▼
                    ┌─────────────────────────────┐  72
                    │  Augmented reality pattern   │╱
                    │        matching unit         │
                    └─────────────────────────────┘
                                  │
                                  ▼
                    ┌─────────────────────────────┐  73
                    │  Augmented reality content   │╱
                    │       providing unit         │
                    └─────────────────────────────┘
                                  │
                                  ▼
                    ┌─────────────────────────────┐  74
                    │     Image marking unit       │╱
                    └─────────────────────────────┘
```

FIG. 7

```
                              ┌──────────────┐  83
                              │    Memory    │╱
                              └──────────────┘
                                     ▲
         81                          │                   84              82
┌──────────────┐            ┌────────▼───────┐      ┌──────────────┐
│  Receiving   │───────────▶│   Processor    │─────▶│   Sending    │
│  apparatus   │            │                │      │  apparatus   │
└──────────────┘            └────────────────┘      └──────────────┘
```

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007073937 A

- JP 4976578 B

**Non-patent literature cited in the description**

- **IGOR KOZINTSEV et al.** *Visual Search and Augmented Reality on Mobile Plattforms,* June 2010, http://airlab.stanford.edu/workshops/ june2010presentations/Kozintsev_ElChoubassi_Int elLabs.pdf